# EUROPÄISCHE PATENTANMELDUNG

(11) **EP 3 159 097 A1**
(43) Veröffentlichungstag der Anmeldung: **26.04.2017**
(21) Anmeldenummer: 16193548.1
(22) Anmeldetag: 12.10.2016
(51) Int. Cl.: B23K 26/342, B23K 9/04, B23K 37/00

(54) **VERFAHREN UND VORRICHTUNG ZUM HERSTELLEN VON METALLISCHEN GEGENSTÄNDEN**

(30) Priorität: 21.10.2015 DE 102015117906
(71) Anmelder: WESTFALEN AG, 48155 Münster (DE)
(72) Erfinder: WOLF, Martin, 44267 Dortmund (DE); JENTER, Ulf, 47058 Duisburg (DE); THUME, Matthias, 48145 Münster (DE)
(74) Vertreter: Patentanwälte und Rechtsanwalt Weiß, Arat & Partner mbB

(57) **Zusammenfassung**

Bei einem Verfahren zum Herstellen von metallischen Gegenständen, insbesondere von Halbzeug-Sonderformaten, durch ein formgebendes Auftragsschweissen auf ein Formteil (1), soll während und/oder nach dem Auftragsschweissen eine Kühlung des Formteils (1) von aussen oder innen (Hohlwelle) durch flüssige Gase oder kalte Gase mit einer definierten Temperatur, insbesondere von -150°C bis - 50 °C, erfolgen.

## Beschreibung

Die Erfindung betrifft ein Verfahren zum Herstellen von metallischen Gegenständen, insbesondere von Halbzeug-Sonderformaten, durch ein formgebendes Auftragsschweissen auf ein Formteil, sowie eine Vorrichtung hierfür.

### Stand der Technik

Aus dem Stand der Technik ist allgemein das sogenannte Auftragsschweissen bekannt, bei dem ein Formteil und insbesondere ein Metallkörper einer Schicht auf dem gleichen oder bevorzugt aus einem anderen Metall belegt wird. Das Auftragsschweissen wird insbesondere dann angewandt, wenn eine gut haftende Anbindung der Schicht, bspw. einer Schutzschicht, an einem Metallkörper gewünscht wird. Für diese besonders gut haftende Anbindung einer Schutzschicht auf einem Metallkörper ist das Schweissen geeignet. Unter Schweissen wird gemäss DIN-ISO 857-1 ein unlösbares Verbinden von Bauteilen unter Anwendung von Wärme verstanden. Ein Aufbringen erfolgt bspw. durch Schmelzschweissen ohne örtlich begrenzten Schmelzfluss und ohne Anwendung von zusätzlichen externen Kräften. Die DIN 8580 bezeichnet das Beschichten eines Werkstücks durch Schweissen als Auftragsschweissen.

Aus der DE 10 2007 063 165 A1 ist bspw. ein Verfahren zum Herstellen einer Korrosionsschicht an rauchgasseitigen Rohr- und Überhitzerflächen bei thermischen Verbrennungsanlagen bekannt. Dies geschieht bspw. durch ein Schweissplattieren mit Nickelbasislegierungen. Hier, aber auch allgemein beim Auftragsschweissen (Schweissplattieren), kommt es häufig zur Entmischung der einzelnen Legierungskomponeten und zum Aufmischen mit dem Grundwerkstoff. Die Schweissplattierungen erstarren mit einem dendritischen Gefüge mit Resteutektikum zwischen den primär erstarrten Dendriten. Diese Art der Gefügeausbildung neigt zur Segregation bestimmter Legierungselemente in den unterschiedlichen Gefügebereichen. Vorzugsweise reichert sich das Resteutektikum mit Legierungselementen an, die eine positive Wirkung auf den Korrosionsschutz haben.

Ferner ist bekannt, dass metallische Werkstoffe in unterschiedlichen Gefügestrukturen erstarren können. Man unterscheidet zwischen dendritischer, globularer, planarer und amorpher Erstarrung.

Um nun eine Korrosionsschicht an rauchgasseitigen Rohr- und Überhitzerflächen bei thermischen Verbrennungsanlagen herstellen zu können, welche gegen Korrosion resistenter ist, wird vorgeschlagen, dass nach dem Schweissplattieren die Abkühlgeschwindigkeit erhöht wird. Hierzu wird insbesondere Eiswasser oder Druckluft verwendet.

Die Formgebung von Halbzeug erfolgt in der Regel über Umformverfahren, wie bspw. Schmieden, Strangpressen, Warm- und Kaltwalzen. Gerade die

Herstellung von Sonderformaten kann sich aufgrund der Anlagen- und Vormaterialverfügbarkeit jedoch als technisch schwierig und aufwendig erweisen. Gegebenenfalls kann eine solche Fertigung zu hohen Kosten führen bzw. gänzlich unmöglich sein.

Eine alternative Möglichkeit zur flexiblen Herstellung von rotationssymmetrischen Sonderformen ist das formgebende Auftragsschweissen, bei dem durch das Aufbringen von Schweissgut auf den rotierenden Formköper der Formkörperdurchmesser bis zur gewünschten Dicke erhöht wird.

Das Problem bei diesen Verfahren jedoch ist, dass bei länger anhaltendem Schweissprozess oder bei Anwendung mehrerer gleichzeitig arbeitender Schweissbrenner das Formteil schnell überhitzt, so dass letztlich der Schweissprozess für längere Zeit unterbrochen werden muss.

Des Weiteren ist ein wesentliches Problem der Wärmeinbringung beim Schweissen der Verzug bzw. das Entstehen von Eigenspannungen.

Der Einsatz von innenliegenden Kühlverfahren hat die Nachteile, dass die Kühlwirkung abhängig ist von der Formteildicke, ab einer bestimmten Formteildicke nicht mehr ausreichend wirkt und zudem zu extremen Eigenspannungsgradienten führt. Des Weiteren muss der Formkörper innen hohl sein, um den Durchtritt des Kühlmediums überhaupt zu ermöglichen. Des Weiteren erscheint zweifelhaft, ob die Kühlwirkung von Wasser zur Erreichung der gewünschten Kühlleistung überhaupt ausreicht.

### Aufgabe

Aufgabe der vorliegenden Erfindung ist es, ein Verfahren und eine Vorrichtung der o. g. Art zu entwickeln, mit dem die Herstellung von massiven oder hohlen, dickwandigen oder dünnwandigen Halbzeug-Sonderformaten über ein formgebendes Auftragsschweissen erreicht werden kann.

### Lösung der Aufgabe

Zur Lösung der Aufgabe der führt, dass nach dem Auftragsschweissen eine Kühlung des Formteils von aussen oder innen (Hohlwelle) durch tiefkalt-flüssige oder kalte Gase mit einer definierten Temperatur, insbesondere von -150°C bis - 50 °C, erfolgt.

Als tiefkalt-flüssige Gase werden vor allem Stickstoff (N2), Siedepunkt -196°C unter Normaldruck, oder Argon (Ar), Siedepunkt -186°C unter Normaldruck, bevorzugt. Es können aber auch andere inerte oder reaktionsträge Gase (wie zum Beispiel Helium, Kohlendioxid) bzw. Gasgemische im flüssigen Aggregatszustand eingesetzt werden.

Das Formteil soll dabei auf der Unterseite teilweise oder ganz in das flüssige Gas eintauchen, wodurch eine ausgeprägte Kontaktkühlung erreicht wird. Zur Erhöhung der Kühlwirkung kann das flüssige Gas in Bewegung versetzt werden. Unabhängig von der Formteildicke wird somit immer die gleiche Kühlleistung erzeugt, wenn die Eintauchtiefe dem Formteildurchmesser bzw. der Formteilhöhe während des Schweissprozesses angepasst wird.

Dabei können beliebig viele gleichartige oder verschiedenartige Schweissbrenner gleichzeitig eingesetzt werden. Als Schweissverfahren kommen sowohl Lichtbogen- als auch Strahlschweissverfahren in Frage, wie zum Beispiel Metallschutzgasschweissen (MSG) in allen Lichtbogenarten, Wolfram- Inertgas-Schweissen mit Kaltdraht (WIG-K) für Gleich- und Wechselstrom, Wolfram-Inertgas-Schweissen mit Heissdraht (WIG-H) für Gleich- und Wechselstrom, Laser mit pulver- und drahtförmigen Zusatzwerkstoffen, Plasma mit pulver- und drahtförmigen Zusatzwerkstoffen und alle damit verbundenen Hybridverfahren. Bei genügender Eintauchtiefe des Formteils wird dabei eine zusätzliche Schutzgaszuführung für den Schweissprozess nicht benötigt, und das verdampfende Gas bzw. Gasgemisch reicht zur Abschirmung des Schweissprozesses vor Luftsauerstoff aus.

Der bzw. die Schweissbrenner können sowohl stationär als auch in einer oder mehreren Raumachsen beweglich sein.

Eigenspannungen und der schweissbedingte Verzug des Formteils werden durch das schockartige Abkühlen minimiert bzw. bleiben vernachlässigbar. Durch das schockartige Abkühlen direkt im Anschluss an den schmelzflüssigen Materialauftrag und durch das Vorliegen von erkaltetem, im Idealfall tiefkalten Schweissgut beim Aufbringen der jeweils nachfolgenden Schweissraupe entsteht ein feinkörniges, homogenes und gleichmässiges Gefüge. Die Heissrissgefahr bzw. das Auftreten anderer Schweissfehler, wie zum Beispiel exzessives Kornwachstum im darunterliegenden Grundwerkstoff oder Schweissgut, wird minimiert. Aufgrund der hohen Kühlleistung können vermutlich sogar sehr dünnwandige Formteile mit komplexer Geometrie hergestellt werden.

Als geeignete Werkstoffe und Werkstoffkombinationen kommen alle schweissbaren, aber nicht aufhärtenden Werkstoffe in Frage, wobei insbesondere geeignet erscheinen: Nickel und Nickellegierungen, Titan und Titanlegierungen, Aluminium und Aluminiumlegierungen, Zirkon und Zirkonlegierungen.

### Figurenbeschreibung

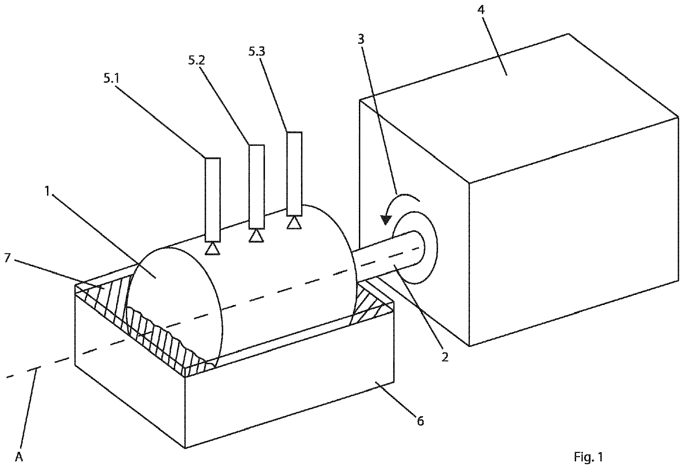

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematisch dargestellte Vorrichtung zum Herstellen von metallischen Gegenständen, insbesondere von Halbzeug-Sonderformaten, durch ein formgebendes Auftragsschweissen auf ein Formteil 1.

Im vorliegenden Ausführungsbeispiel handelt es sich bei dem Formteil 1 um einen walzenförmigen Gegenstand. Darauf ist allerdings die Erfindung keineswegs beschränkt, sie bezieht sich auf ein formgebendes Auftragsschweissen auf ein beliebig ausgestaltetes Formteil. Das Auftragsschweissen kann auch nicht ein äusserliches Auftragsschweissen sein, vom Erfindungsgedanken wird auch ein Auftragsschweissen im Inneren des Formteils umfasst.

Das Formteil 1 ist an oder auf einer Welle 2 angeordnet, welche, wie der Pfeil 3 andeutet, gegen den Uhrzeigersinn dreht. Die Drehung erfolgt um eine Drehachse A. Sie wird von einer Einrichtung 4 zum Drehen der Welle 2 bewerkstelligt, die beliebig ausgestaltete sein kann. Beispielsweise kann es sich um einen Schrittmotor handeln.

Das Auftragsschweissen auf das Formteil 1 erfolgt mittels geeigneten Einrichtungen, insbesondere Schweissbrennern 5.1, 5.2 und 5.3, die ebenfalls beliebig ausgestaltet sein können. Im vorliegenden Fall sind drei Schweissbrennern 5.1 bis 5.3 gezeigt, es können auch weniger oder mehr sein.

Das Formteil 1 greift zumindest teilweise in einen Behälter 6 ein, der mit einem gestrichelt angedeutetem flüssigen Gas 7 gefüllt ist. Bei diesem flüssigen Gas kann es um N2 oder Argon handeln, denkbar sind aber auch andere flüssige Gase, die zum Kühlen geeignet sind.

Die Funktionsweise der vorliegenden Erfindung ist folgende:
Auf dem Formteil 1 soll ein Auftragsschweissen stattfinden. Dies wird durch die Schneidbrenner 5.1 bis 5.3 bewerkstelligt, wobei der Auftrag selbst nicht näher dargestellt ist.

Erfindungsgemäss soll nach dem Auftragsschweissen eine Kühlung des Formteils von aussen erfolgen. Dies geschieht durch das flüssige Gas in dem Behälter 6, wobei das Formteil 1 in dem flüssigen Gas 7 um die Drehachse A dreht.

Ein Mass der Kühlung kann bspw. dadurch bestimmt werden, indem die Eintauchtiefe des Formteils in das flüssige Gas verändert wird. Beispielsweise kann eine Eintauchtiefe je nach Formteildurchmesser einem veränderten Formteil angepasst werden.

**Bezugszeichenliste**

| | | | | | |
|---|---|---|---|---|---|
| 1 | Formteil | 34 | | 67 | |
| 2 | Welle | 35 | | 68 | |
| 3 | Drehrichtung | 36 | | 69 | |
| 4 | Dreheinrichtung | 37 | | 70 | |
| 5 | Schweissbrenner | 38 | | 71 | |
| 6 | Behälter | 39 | | 72 | |
| 7 | Gas | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | A | Drehachse |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen von metallischen Gegenständen, insbesondere von Halbzeug-Sonderformaten, durch ein formgebendes Auftragsschweissen auf ein Formteil (1),
**dadurch gekennzeichnet,**
**dass** während und/oder nach dem Auftragsschweissen eine Kühlung des Formteils (1) von aussen oder innen (Hohlwelle) durch flüssige Gase oder kalte Gase mit einer definierten Temperatur, insbesondere von -150°C bis - 50 °C, erfolgt.

2. Verfahren nach Anspruch 1, **dadurch gekennzeichnet, dass** als flüssige Gase N2 oder Ar verwendet werden.

3. Verfahren nach Anspruch 1 oder 2, **dadurch gekennzeichnet, dass** das Formteil (1) zumindest teilweise oder ganz in das flüssige Gas eingetaucht wird.

4. Verfahren nach wenigstens einem der vorhergehenden Ansprüche, **dadurch gekennzeichnet, dass** das Formteil (1) in dem flüssigen Gas gedreht wird oder der Schweissbrenner über das im flüssigen Gas befindliche Formteil geführt wird.

5. Verfahren nach wenigstens einem der vorhergehenden Ansprüche, **dadurch gekennzeichnet, dass** eine Eintauchtiefe des Formteils dem Formteildurchmesser oder -höhe angepasst wird.

6. Verfahren nach wenigstens einem der vorhergehenden Ansprüche, **dadurch gekennzeichnet, dass** zum Auftragsschweissen mehrere gleichartige oder verschiedenartige Einrichtungen, insbesondere Schweissbrenner (5.1-5.3) bevorzugt gleichzeitig eingesetzt werden.

7. Vorrichtung zur Durchführung des Verfahrens nach wenigstens einem der vorhergehenden Ansprüche, **dadurch gekennzeichnet, dass** dem Formteil (1) ein Behälter (6) zugeordnet ist, der das flüssige Gas aufnimmt.

8. Vorrichtung nach Anspruch 7, **dadurch gekennzeichnet, dass** dem Formteil (1) eine Einrichtung (4) zum Drehen bzw. zum Verfahren des Schweissbrenners zugeordnet ist.

9. Vorrichtung nach Anspruch 7 oder 8, **dadurch gekennzeichnet, dass** dem Formteil (1) zumindest ein Schweissbrenner (5.1-5.3), bevorzugt eine Mehrzahl von Schweissbrenner zugeordnet ist.
